# EUROPEAN PATENT APPLICATION

(11) **EP 3 670 897 A1**
(43) Date of publication of application: **24.06.2020**
(21) Application number: 18215103.5
(22) Date of filing: 21.12.2018
(51) Int. Cl.: F03D 1/06, F03D 7/02

(54) **WIND TURBINE BLADE, WIND TURBINE, METHOD FOR MANUFACTURING A WIND TURBINE BLADE AND METHOD FOR MAINTAINING A WIND TURBINE**

(71) Applicant: Siemens Gamesa Renewable Energy A/S, 7330 Brande (DK)
(72) Inventor: Burchardt, Claus, 9260 Gistrup (DK); Joergensen, Jens Grandjean, 9000 Aalborg (DK); Nielsen, Mogens, 9220 Aalborg (DK)
(74) Representative: Aspacher, Karl-Georg

(57) **Abstract**

A wind turbine blade (3) having a lengthwise and a chordwise direction (14), the wind turbine blade (3) comprising:
a first blade element (22) extending in the lengthwise direction (21) and having a first airfoil (46, 46') in the chordwise direction (14), and
a second blade element (23) extending in the lengthwise direction (21) and having a second airfoil (47, 47') in the chordwise direction (14),
wherein the first and second airfoils (46, 46', 47, 47') are arranged besides each other when seen in the lengthwise direction (21).

By having the wind turbine blade comprising the first and second blade elements, the blade can be manufactured by manufacturing the first blade element and the second blade element separately. Thus, larger wind turbine blades can be manufactured by using conventional production setups having limited production space. Further, as the first and second blade elements have a smaller chord length than a conventional wind turbine blade, they can be manufactured by an extruding and/or pultruding process.

## Description

The present invention relates to a wind turbine blade, a wind turbine, a method for manufacturing a wind turbine blade and a method for maintaining a wind turbine.

One way to produce more power using a wind turbine under given wind conditions is to increase the size of the blades. However, the manufacture of wind turbine blades, their transportation to wind harvesting sites and their installation is becoming increasingly difficult for increasing blade sizes.

Furthermore, blades of a wind turbine in operation often need to be repaired or replaced. For example, lightning strikes may damage a blade tip and/or an outer blade portion and require their repair or replacement. Further, the leading edge of a blade may become eroded due to rain, ice, sand and/or bugs requiring repair.

It is one object of the present invention to provide an improved wind turbine blade and an improved wind turbine. Furthermore, it is a further object of the present invention to provide a method for manufacturing a wind turbine blade and a method for maintaining a wind turbine.

Accordingly, a wind turbine blade is provided. The wind turbine blade has a lengthwise and a chordwise direction. The wind turbine blade comprises a first blade element extending in the lengthwise direction and having a first airfoil in the chordwise direction. Further, the wind turbine blade comprises a second blade element extending in the lengthwise direction and having a second airfoil in the chordwise direction. The first and second airfoils are arranged besides each other when seen in the lengthwise direction.

By having the wind turbine blade comprising the first and second blade elements, the blade can be manufactured by manufacturing the first blade element and the second blade element separately. Thus, larger wind turbine blades can be manufactured by using conventional production setups having limited production space. Further, as the first and second blade elements have a smaller chord length than a conventional wind turbine blade, they can be manufactured by an extruding and/or pultruding process.

Further, the wind turbine blade can be transported by transporting the first blade element and the second blade element separately, e.g., to a wind harvesting site and/or a harbor site. Further, the first blade element and the second blade element can be installed at the wind turbine separately.

In addition, the wind turbine blade having the first and second blade elements can be repaired by repairing and/or replacing the first blade element and/or the second blade element. In particular, the first blade element and/or the second blade element can be repaired and/or replaced without dismounting a root blade element connected to a hub of the wind turbine.

By having the first blade element with the first airfoil and the second blade element with the second airfoil, wherein the first and second airfoils are arranged besides each other when seen in the lengthwise direction, a blade with improved aerodynamic properties can be provided. Thus, it is possible to achieve a more efficient energy production of the wind turbine. For example, as the first and second airfoils each have a smaller chord length than a conventional wind turbine blade, a smaller Reynolds number may be achieved allowing higher tip velocities. Further, the split blade profile with the first and second airfoils can, for example, provide an enhanced gliding number (lift-to-drag ratio) of the blade tip.

The wind turbine blade is part of a rotor of a wind turbine. The wind turbine is an apparatus to convert the wind's kinetic energy into electrical energy. The wind turbine comprises, for example, the rotor having one or more of the blades, a nacelle including a generator, and a tower holding, at its top end, the nacelle. The tower of the wind turbine may be connected via a transition piece to a foundation of the wind turbine, such as a monopile in the seabed.

The wind turbine blade comprises, for example, a root blade element for connection with a hub of the wind turbine. The root blade element comprises, for example, a cylindrical root section for connection with the hub and an aerodynamically formed section. The aerodynamically formed section comprises, for example, a leading edge and a trailing edge. The aerodynamically formed section comprises, for example, a chord line connecting the leading edge and the trailing edge of the aerodynamically formed section.

The wind turbine blade comprises, for example, a blade tip. In particular, the blade tip may comprise the first and second blade element.

The wind turbine blade, e.g., the root blade element, is, for example, fixedly connected to the hub. The wind turbine blade is, for example, directly bolted to the hub.

Alternatively, the wind turbine blade, e.g., the root blade element, is rotatably connected to the hub. For example, the wind turbine blade is connected to a pitch bearing of the wind turbine, and the pitch bearing is connected to the hub. The pitch bearing is configured to adjust the angle of attack of the blade according to the wind speed to control the rotational speed of the blade.

The lengthwise direction of the wind turbine blade is, in particular, the direction from the root blade element to the blade tip. The lengthwise direction of the wind turbine blade is, in particular, the direction from the hub of the wind turbine to the blade tip. The chordwise direction of the wind turbine blade is, in particular, a direction perpendicular to the lengthwise direction. The chordwise direction of the wind turbine blade is, in particular, a direction of the chord line of the aerodynamically formed section of the root blade element.

The first airfoil is, in particular, the cross-section of the first blade element in the chordwise direction. The first airfoil is, in particular, the cross-section of the first blade element in a direction of the apparent wind as seen from the first blade element in operation. The apparent wind for the first blade element in operation is the vector sum of the vector of the actual wind and the vector of the relative wind caused by the rotation of the blade.

The first airfoil comprises a front portion where it is attacked by the apparent wind. The airflow of the apparent wind is separated at the front portion. The first airfoil comprises a leading edge which is a point at the front portion of the first airfoil having the maximum curvature (minimum radius). The first airfoil comprises a rear portion opposite the front portion where the airflow separated by the leading edge rejoins. The first airfoil comprises a trailing edge which is a point at the rear portion having the maximum curvature.

The first airfoil comprises a first chord line connecting the leading edge and the trailing edge of the first airfoil. The first chord line has a first chord length.

Similar to the first airfoil, the second airfoil comprises a leading edge, a trailing edge and a second chord line having a second chord length.

The first chord line and the second chord line are, for example, parallel to each other. Alternatively, an angle between the first chord line and the second chord line is non-zero, preferably smaller than 5 degrees, smaller than 10 degrees, smaller than 15 degrees, smaller than 20 degrees and/or smaller than 45 degrees.

The chord line of the aerodynamically formed section of the root blade element, the first chord line and the second chord line are for example parallel to each other. Alternatively, an angle between the chord line of the aerodynamically formed section and the first chord line and/or the second chord line is non-zero, preferably smaller than 5 degrees, smaller than 10 degrees, smaller than 15 degrees, smaller than 20 degrees and/or smaller than 45 degrees.

The first airfoil and the second airfoil are arranged besides each other when seen in the lengthwise direction by arranging the first blade element and the second blade element besides each other when seen in the lengthwise direction. The first airfoil and the second airfoil are arranged besides each other when seen in the lengthwise direction such that the first and second airfoils are dividing the wind turbine blade in the chordwise direction. In particular, the first airfoil and the second airfoil are discontinuous with each other. In particular, a circumferential line of the first airfoil is closed, a circumferential line of the second airfoil is closed, and the circumferential lines of the first and second airfoils are discontinuous with each other.

According to an embodiment, the first airfoil is spaced apart from the second airfoil.

In particular, the first airfoil is spaced apart from the second airfoil such that a gap is formed between the first and the second airfoils.

By having the first airfoil spaced apart from the second airfoil, the first and/or second chord length can be configured smaller.

According to a further embodiment, the first airfoil has a first chord length and the second airfoil has a second chord length. The first chord length is different from the second chord length.

By having the first and second airfoils with different chord lengths a wind turbine blade can be provided with aerodynamic properties adjusted to the wind condition at a particular site.

In embodiments, the first chord length may also be equal to the second chord length to adjust to wind conditions at a particular site.

According to a further embodiment, the first airfoil has a leading edge and a trailing edge. The second blade element is offset relative to the first blade element in a direction pointing from the leading edge of the first airfoil to the trailing edge of the first airfoil, and/or the second blade element is offset relative to the first blade element in a direction perpendicular to a direction pointing from the leading edge of the first airfoil to the trailing edge of the first airfoil.

In particular, the second airfoil is arranged with respect to the chord line of the first airfoil towards the trailing edge of the first airfoil and/or below the trailing edge of the first airfoil.

Having the second airfoil arranged towards the trailing edge of the first airfoil and/or below the trailing edge of the first airfoil provides improved aerodynamic properties of the first and second blade elements. In particular, with this configuration it may be achieved that an airflow of the apparent wind separated at the leading edge of the first airfoil rejoins at the trailing edge of the second airfoil. In particular, it may be prevented that the airflow separated at the leading edge of the first airfoil rejoins before flowing around the second airfoil. In particular, stalling of the airflow may be better prevented.

According to a further embodiment, the wind turbine blade comprises an actuator configured for moving the first blade element such that an aerodynamic property of the wind turbine blade is changed, and/or for moving the second blade element such that an aerodynamic property of the wind turbine blade is changed.

For example, the actuator is configured to rotate the first blade element around a rotation axis being parallel to the lengthwise direction, and/or the actuator is configured to rotate the second blade element around a rotation axis being parallel to the lengthwise direction.

For example, the rotation axis of the first blade element is closer to the leading edge than to the trailing edge of the first airfoil, and/or the rotation axis of the second blade element is closer to the leading edge than to the trailing edge of the second airfoil.

For example, the actuator is configured to move the first blade element translationally relative to the second blade element, and/or the actuator is configured to move the second blade element translationally relative to the first blade element.

By having the actuator configured for moving the first and/or second blade elements, aerodynamic properties of the wind turbine blade can be adjusted to current wind conditions. For example, in high wind conditions and/or sudden increases of the wind speed, the actuator can move the first and/or second blade element such the lift acting on the respective blade element is reduced. In this manner, for example, a too fast rotation of the wind turbine blade and/or too high loads can be avoided. Thus, damage of the wind turbine blade and the wind turbine can be prevented. Likewise, in low wind conditions the actuator can move the first and/or second blade element such that the lift-to-drag ratio of the respective blade element is enhanced. Thus, an efficiency of energy production can be increased.

According to a further embodiment, the wind turbine blade comprises a root blade element configured for being connected to a hub of a wind turbine. The wind turbine blade further comprises a third blade element extending in the lengthwise direction and having a third airfoil in the chordwise direction. The wind turbine blade further comprises a fourth blade element extending in the lengthwise direction and having a fourth airfoil in the chordwise direction. The third and fourth airfoils are arranged besides each other when seen in the lengthwise direction. The third and fourth blade elements are arranged with respect to the root blade element away from the first and second blade elements. The third and fourth blade elements are connected to the first and second blade elements by connecting means.

The connecting means comprise, for example, at least one plate. The at least one plate is, in particular, extended in the chordwise direction of the aerodynamically formed section of the root blade element, the chordwise direction of the first airfoil and/or the chordwise direction of the second airfoil.

The first and second blade elements are connected, for example, to one side of the plate and the third and fourth blade elements are connected, for example, to the other side of the plate.

Alternatively, the first and second blade elements are connected, for example, to a first plate and the third and fourth blade elements are connected, for example, to a second plate. The first and second plates are then connected to each other, e.g., by means of bolting the first plate to the second plate.

For example, the first blade element, the second blade element and the first plate form a first segment of the wind turbine blade. For example, the third blade element, the fourth blade element and the second plate form a second segment of the wind turbine blade. The first and second segments are then connected to each other, e.g., by means of bolting the first plate to the second plate.

Having the third and fourth airfoils arranged with respect to the root blade element away from the first and second blade elements and being connected to the first and second blade elements by connecting means allows to manufacture, transport and/or assemble the third and fourth airfoils separately from the first and second airfoils.

By having the third and fourth airfoils a wind turbine blade with a larger total blade length can be provided. In particular, a wind turbine blade with a larger total blade length can be provided by just adding the third and fourth blade elements without changing the production process for the remaining components of the wind turbine blade, such as the root blade element, the first and second blade elements and/or the blade tip. Thus, the total blade length can be easily adjusted to specific site conditions.

In embodiments, the third airfoil is offset relative to the fourth airfoil in a direction pointing from a leading edge of the third airfoil to a trailing edge of the third airfoil, and/or the third airfoil is offset relative to the fourth airfoil in a direction perpendicular to a direction pointing from a leading edge of the third airfoil to a trailing edge of the third airfoil.

In embodiments, the first segment may comprise a further blade element extending in the lengthwise direction and having a further airfoil in the chordwise direction. The further airfoil of the first segment may be arranged beside the first and second airfoils when seen in the lengthwise direction.

In embodiments, the second segment may comprise a further blade element extending in the lengthwise direction and having a further airfoil in the chordwise direction, the further airfoil of the second segment being arranged beside the third and fourth airfoils when seen in the lengthwise direction.

By having further airfoils in the first and/or second segment the first, second, third, fourth and/or further airfoils can have smaller chord lengths. Thus, a manufacturing process of the blade elements can be further simplified and aerodynamic properties of the wind turbine blade can be further improved and/or adjusted to specific site conditions.

Further, the number of airfoils of the first segment may differ from the number of airfoils of the second segment. For example, the second segment may comprise a smaller number of airfoils compared to the first segment. Thus, the wind turbine blade comprising the first and second segments may be configured such that it is tapered towards the blade tip.

According to a further embodiment, the wind turbine blade comprises a root blade element configured for being connected to a hub of a wind turbine. The wind turbine blade further comprises a pretension cable. The pretension cable is connecting the first blade element, the second blade element, the third blade element, the fourth blade element and/or the connecting means to the root blade element. The pretension cable is configured for being connected inside the hub of the wind turbine.

The pretension cable is, for example, made from metal such as steel.

The pretension cable is, in particular, connecting the first blade element, the second blade element, the third blade element, the fourth blade element and/or the connecting means to the root blade element by being guided through openings in the first blade element, the second blade element, the third blade element, the fourth blade element and/or the connecting means.

Having the pretension cable connecting the first, second, third, fourth blade elements and/or the connecting means to the root blade element allows to better fix the first, second, third and/or fourth blade elements with each other and with the root blade element. In particular, the first, second, third and/or fourth blade elements can be pulled towards the root blade element. Further, the pretension cable may be configured for being fixed inside the hub of the wind turbine. Thus, a stable wind turbine blade comprising several blade elements can be built.

Having the pretension cable allows to further use it as a lightning conductor. Thus, damages due to lightning strikes can be prevented.

According to a further embodiment, the wind turbine blade comprises a blade tip including an angled portion. The angled portion is angled relative to the lengthwise direction of the wind turbine blade.

The blade tip with the angled portion is, in particular, a winglet.

Having the blade tip with the angled portion attached at the tip end of the wind turbine blade may decrease the drag on the wind turbine blade, increase the power efficiency of the wind turbine and/or reduce noise emitted by the wind turbine blade.

According to a second aspect, a wind turbine is provided comprising a wind turbine blade as described above.

According to an embodiment of the second aspect, the wind turbine blade of the wind turbine comprises a root blade element configured for being connected to a hub of a wind turbine and a pretension cable. Further, the wind turbine comprises a tensioning device for tensioning and/or releasing the pretension cable.

For example, the tensioning device is arranged in the hub of the wind turbine. The tensioning device comprises, for example, electrical and/or mechanical means for tensioning the pretension cable and a reel for winding the pretension cable on the reel.

The pretension cable connects the first, second, third and/or fourth blades elements with the root blade element and the hub.

Having the tensioning device allows to pull the pretension cable towards the tensioning device, thereby providing a stable connection of the first, second, third and/or fourth blades elements with the root blade element and the hub.

According to a further embodiment of the second aspect, the pretension cable comprises an additional length sufficiently long for lowering the first and second blade elements and/or the third and fourth blade elements down a tower of the wind turbine for maintaining the wind turbine blade.

For example, the first and second blade elements and/or the third and fourth blade elements are lowered down to a lower part of the tower of the wind turbine. The wind turbine is, for example, an offshore wind turbine, and the first and second blade elements and/or the third and fourth blade elements are lowered down to sea level, e.g., down to a vessel at sea level. The wind turbine is, for example, an onshore wind turbine, and the first and second blade elements and/or the third and fourth blade elements are lowered down to ground. Having the additional length of the pretension cable allows to repair and/or replace the first, second, third and/or fourth blade element without using a crane and/or without performing work at high altitude.

According to a third aspect, a method for manufacturing a wind turbine blade is proposed. The wind turbine blade has a lengthwise and a chordwise direction. The method comprises the step of providing a first blade element having a first airfoil in the chordwise direction and a second blade element having a second airfoil in the chordwise direction. Further, the method comprises the step of arranging the first and second airfoils besides each other when seen in the lengthwise direction.

Providing the first blade element comprises, in particular, manufacturing the first blade element. Providing the second blade element comprises, in particular, manufacturing the second blade element. The first and second blade elements are, for example, manufactured by an extruding and/or pultruding process. The first and second blade elements are, for example, made from fiber-reinforced plastics, such as glass-fiber reinforced plastics and/or carbon-fiber reinforced plastics. The first and second blade elements comprise, for example, metal such as aluminum.

By providing the first and second blade elements and arranging them besides each other, the first and second blade elements can be manufactured separately. As the first and second blade elements have a smaller size, in particular chord length, than a conventional wind turbine blade, they can be manufactured by an extruding and/or pultruding process. Hence, larger wind turbine blades can be easily manufactured despite limited production space.

Further, the first second blade elements can be transported separately, e.g., to a wind harvesting site and/or a harbor site. Further, the first blade element and the second blade element can be installed at the wind turbine separately.

According to a further embodiment of the third aspect, the first and second airfoils are arranged besides each other by connecting both the first airfoil and the second airfoil to connecting means. The first and second airfoils and the connecting means form a first blade segment.

Having the first blade segment allows an easier transportation and installation of the wind turbine blade.

According to a further embodiment of the third aspect, the method comprises the step of providing a third blade element having a third airfoil in the chordwise direction and a fourth blade element having a fourth airfoil in the chordwise direction. Further, the method comprises the step of arranging the third and fourth airfoils besides each other when seen in the lengthwise direction by connecting both the third airfoil and the fourth airfoil to further connecting means. The third and fourth airfoils and the further connecting means form a second blade segment. Further, the method comprises the step of connecting the first blade segment and the second blade segment to each other.

By having the second blade segment in addition to the first blade segment the individual blade segments can be designed smaller in the lengthwise direction, thus allowing an easier transportation and installation, and/or a wind turbine blade with a larger total length can be provided.

In embodiments, the method comprises the step of forming further segments similar to the first and second segments.

According to a third aspect, a method for maintaining a wind turbine comprising a wind turbine blade as described above is proposed. The method comprises the step of releasing a pretension cable. Further, the method comprises the step of lowering the first and second blade elements and/or the third and fourth blade elements down a tower of the wind turbine.

Having the steps of releasing the pretension cable and lowering the first and second blade elements and/or the third and fourth blade elements down the tower of the wind turbine allows to repair and/or replace the first, second, third and/or fourth blade elements without the need of a crane or of working at high altitude.

The embodiments and features described with reference to the wind turbine blade and the wind turbine of the present invention apply mutatis mutandis to the methods of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows, in a front view, a wind turbine according to an embodiment;
- Fig. 2: shows an enlarged perspective view of a rotor of the wind turbine from Fig. 1 illustrating details of a blade of the rotor;
- Fig. 3: shows an exploded perspective view of blade elements of the blade of Fig. 2;
- Fig. 4: shows a perspective view of the blade of Fig. 2 illustrating assembling and/or dissembling the blade;
- Fig. 5: shows a cross-section view of the blade from Fig. 2 along line III in Fig. 2;
- Fig. 6: shows a similar arrangement as Fig. 5 but for a blade according to a further variant;
- Fig. 7: shows a flowchart illustrating a method for manufacturing a wind turbine blade according to an embodiment; and
- Fig. 8: shows a flowchart illustrating a method for maintaining a wind turbine according to an embodiment.

In the Figures, like reference numerals designate like or functionally equivalent elements, unless otherwise indicated.

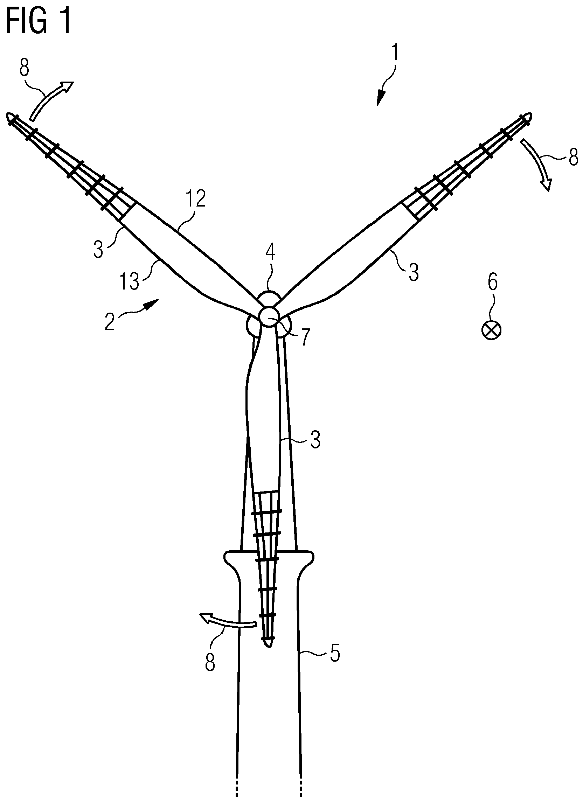

Fig. 1 shows a wind turbine 1 according to an embodiment. The wind turbine 1 comprises a rotor 2 having, for example, three rotor blades 3. The rotor blades 3 are each connected to a hub 4 of the wind turbine 1. A shaft (not shown) connects the hub 4 to a generator (not shown) arranged inside a nacelle (not shown). The nacelle is arranged at the upper end of a tower 5 of the wind turbine 1. The tower 5 is erected on a foundation (not shown) driven, for example, into a seabed or an onshore ground.

During operation of the wind turbine 1 the blades 3 are driven by wind to rotate. In the example of Fig. 1, the direction of the actual wind 6 is frontal towards a front face 7 of the wind turbine 1 and it is causing the blades 3 to rotate in a clockwise direction 8 in Fig. 1.

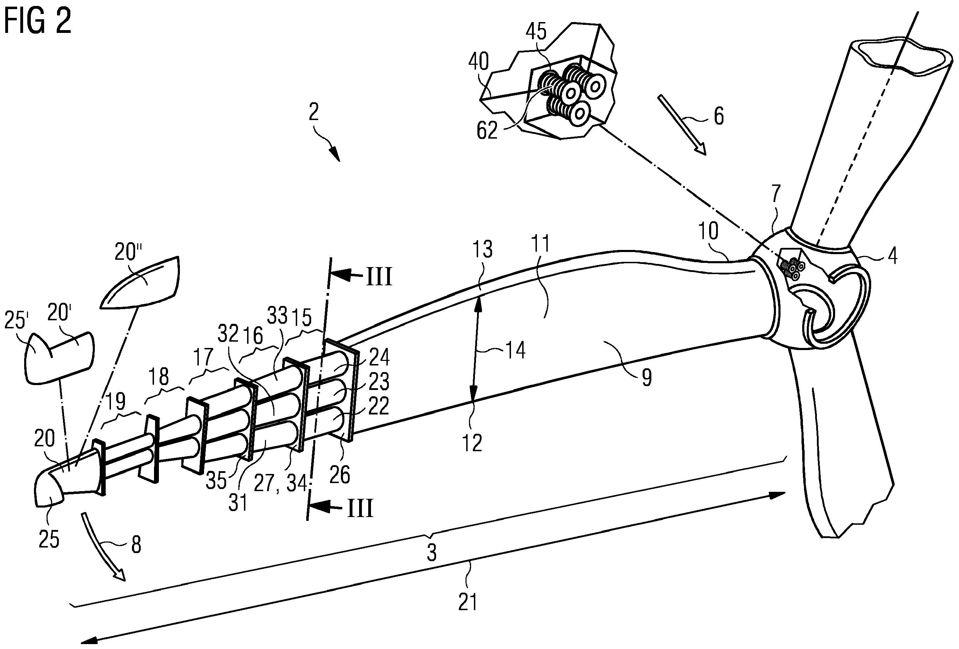

Fig. 2 shows an enlarged perspective view of the rotor 2 of the wind turbine 1 from Fig. 1. In Fig. 2, details of one of the blades 3 are shown.

The blade 3 comprises a root blade element 9. The root blade element 9 comprises a cylindrical root section 10 bolted to the hub 4. The root blade element 9 further comprises an aerodynamically formed section 11 continuous with the cylindrical root section 10. In particular, the aerodynamically formed section 11 and the cylindrical root section 10 are one single piece in this example.

The aerodynamically formed section 11 comprises a leading edge 12 where the aerodynamically formed section 11 cuts through the airflow during rotation. The aerodynamically formed section 11 further comprises a trailing edge 13 where the airflow separated by the aerodynamically formed section 11 rejoins. A line connecting the leading edge 12 of the aerodynamically formed section 11 and the trailing edge 13 of the aerodynamically formed section 11 defines a chordwise direction 14 of the wind turbine blade 1.

The blade 3 further comprises a first blade segment 15 connected to the aerodynamically formed root section 11. The blade 3 further comprises a second blade segment 16 connected to the first blade segment 15. In addition to the first and second blade segments 15, 16, the blade 3 may also comprise further blade segments connected to the second blade segment 16. In the example of Fig. 2, the blade 3 comprises further blade segments 17, 18, 19.

The blade 3 further comprises a blade tip 20 connected to the outermost blade segment, i.e. the further blade segment 19 in the example of Fig. 2. The blade tip 20 can comprise an angled portion 25 angled relative to a lengthwise direction 21. Fig. 2 shows a further variant of a blade tip 20' with an angled portion 25' and a variant of a straight blade tip 20" without angled portion.

The direction from the blade tip 20 to the root blade element 9, in particular, to the cylindrical root section 10 defines the lengthwise direction 21 of the wind turbine blade 1.

In the following, the first and second blade segments 15, 16 are described in detail. A description of the further blade segments 17, 18, 19 is omitted as they are similar to the first and second blade segments 15, 16.

The first blade segment 15 comprises a first blade element 22, a second blade element 23 and a further blade element 24 all extending in the lengthwise direction 21. The first blade segment 15 further comprises a first plate 26 and a second plate 27 both extending in the chordwise direction 14.

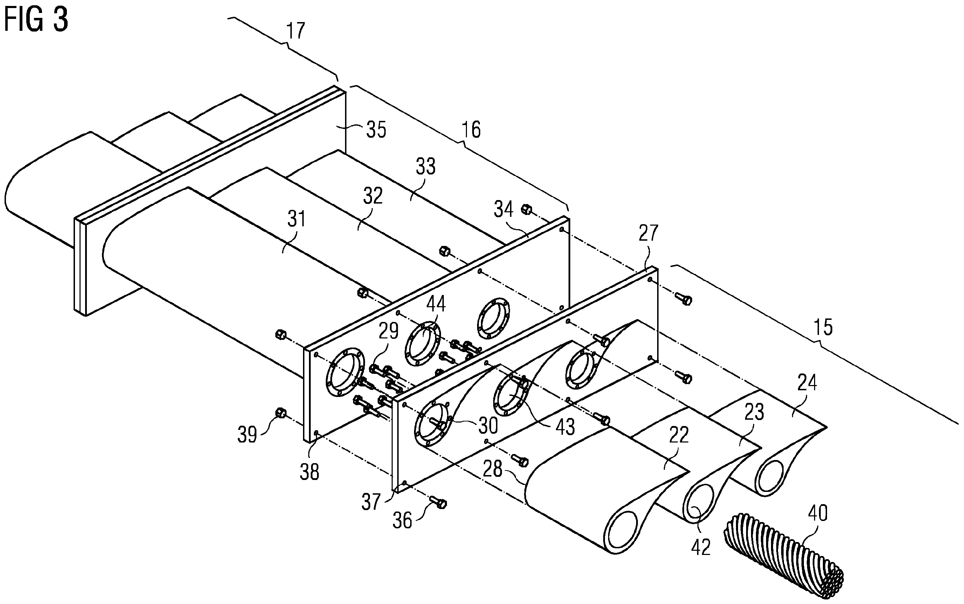

The first blade element 22, the second blade element 23 and the further blade element 24 are each bolted at one end thereof to the first plate 26 and bolted at another end thereof to the second plate 27. For example, as shown in Fig. 3, end 28 of the first blade element 22 is bolted to the second plate 27 by means of bolts 29 inserted through holes 30 in the second plate 27 and engaged with the end 28 of the first blade element 22. In Fig. 3, only one of the six shown bolts 29 and only one of the six shown holes 30 are denoted with a reference sign for simplicity.

The second blade segment 16 comprises a third blade element 31, a second blade element 32 and a further blade element 33 all extending in the lengthwise direction 21. The second blade segment 16 further comprises a third plate 34 and a fourth plate 35 both extending in the chordwise direction 14.

In the second blade element 16, the third blade element 31, the fourth blade element 32 and the further blade element 33 are each bolted at one end thereof to the third plate 34 and bolted at another end thereof to the fourth plate 35. The connection is similar as the connection of the blade elements 22, 23, 24 of the first blade segment 15 with the second plate 27.

As shown in Fig. 3, the first segment 15 and the second segment 16 are bolted to each other by means of bolts 36. The bolts 36 are inserted through openings 37 in the second plate 27 and through openings 38 in the third plate 34 and are engaged with engagement means 39 such as a nut. In Fig. 3, only one of each of eight shown bolts 36, holes 37, holes 38 and engagement means 39 are denoted with a refence sign for simplicity.

In a similar manner, the second segment 16 is connected to the further segments 17, 18, 19 and/or the tip blade 20, 20', 20" and the first segment 15 is connected to the root blade element 9.

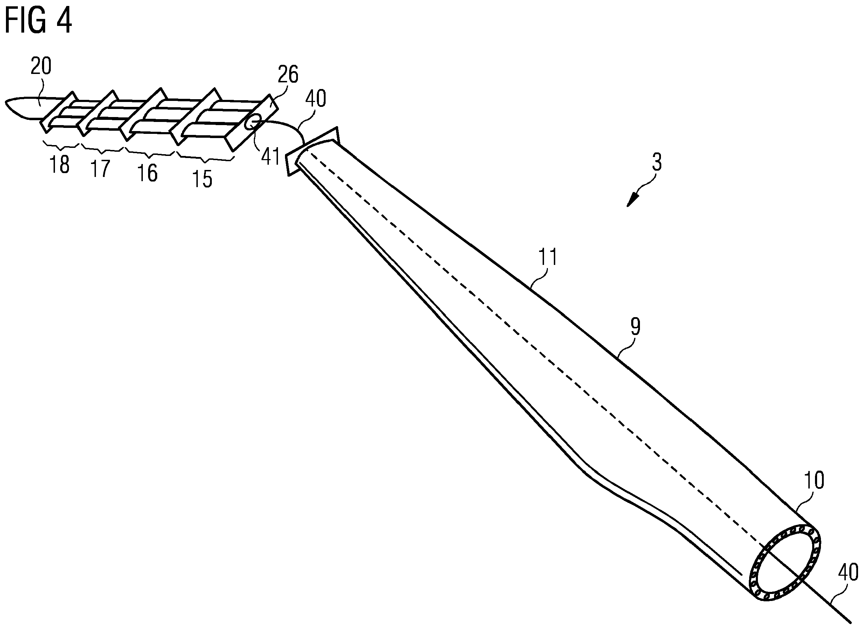

As shown in Figs. 2 to 4, a pretension cable 40 is connecting the first, second and further segments 15, 16, 17, 18, 19 to the root blade segment 9 and to the hub 4. In the shown example, the pretension cable 40 is guided through an opening 41 (Fig. 4) of the first plate 26, an opening 42 (Fig. 3) of the second blade element 23, an opening 43 of the second plate 27, an opening 44 of the third plate 34 and through further openings of the further blade elements 17, 18, 19 and further plates. The pretension cable 40 is guided through the interior of the root blade element 9 (Fig. 4) and fixed to a tensioning device 45 inside the hub 4 (Fig. 2). The tensioning device 45 tensions the pretension cable 40 to pull the first, second and further segments 15, 16, 17, 18, 19 towards the root blade segment 9 and towards the hub 4. In this manner, a stable configuration of the blade 3 containing several segments and blade elements is achieved.

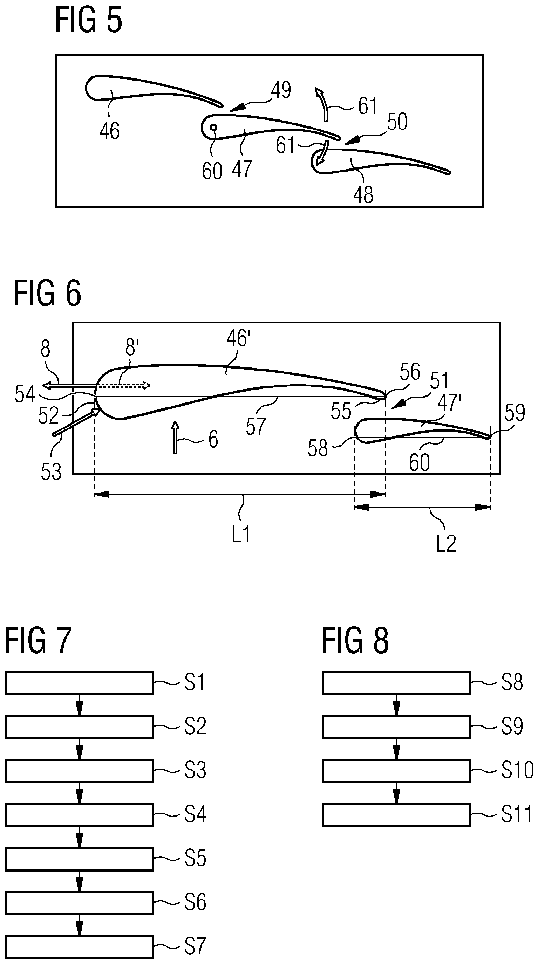

Fig. 5 shows a cross-section view of the blade 3 of Fig. 2 taken along line III in Fig. 2.

Fig. 5 shows a first airfoil 46 of the first blade element 22, a second airfoil 47 of the second blade element 23 and a further airfoil 48 of the further blade element 24 of the first segment 15. The first airfoil 46, the second airfoil 47 and the further airfoil 48 are arranged besides each other in Fig. 5, i.e. when seen in the lengthwise direction 21 (Fig. 2). In particular, gaps 49, 50 are formed between the airfoils 46, 47, 48.

In another example, the first blade segment 15 may comprise instead of three blade elements 22, 23, 24, as shown in Fig. 2 and 5, as a variant only two blade elements 22', 23', as shown in Fig. 6. Fig. 6 shows a first airfoil 46' of the first blade element 22' and a second airfoil 47' of the second blade element 23'. The first airfoil 46' and the second airfoil 47' are arranged besides each other as shown in Fig. 6, i.e. when seen in the lengthwise direction 21 (Fig. 2). In particular, a gap 51 is formed between the first airfoil 46' and the second airfoil 47'.

The first airfoil 46' comprises a front portion 52 where it is attacked by the apparent wind 53. The apparent wind 53 for the first blade element 22' in operation is the vector sum of the vector of the actual wind 6 and the vector of the relative wind 8' caused by the rotation 8 of the blade 3. The airflow of the apparent wind 53 is separated at the front portion 52. The first airfoil 46' comprises a leading edge 54 which is a point at the front portion 52 of the first airfoil 46' having the maximum curvature (minimum radius). The first airfoil 46' comprises a rear portion 55 opposite the front portion 52. At the rear portion 55, the airflow separated by the front portion 52 rejoins. The first airfoil 46' comprises a trailing edge 56 which is a point at the rear portion 55 having the maximum curvature.

The first airfoil 46' comprises a first chord line 57 connecting the leading edge 54 and the trailing edge 56 of the first airfoil 46'. The first chord line 57 has a first chord length L1.

Similar to the first airfoil 46', the second airfoil 47' comprises a leading edge 58, a trailing edge 59 and a chord line 60 having a second chord length L2.

The first chord length L1 of the first airfoil 46' is in this example larger than the second chord length L2 of the second airfoil 47'. Alternatively, as shown in Fig. 5, the first and second airfoils 46, 47 can also have the same chord length.

In the example of Fig. 6, the first chord line L1 and the second chord line L2 are parallel to each other. Further, the first and second chord lines L1, L2 in Fig. 6 are each inclined relative to the chordwise direction 14 (Fig. 2) which corresponds, for example, to a line connecting the leading edge 54 of the first airfoil 46' and the trailing edge 59 of the second airfoil 47'.

As shown in Fig. 6, the second airfoil 47' is offset relative to the first airfoil 46' in a direction pointing from the leading edge 54 of the first airfoil 47' to the trailing edge 56 of the first airfoil 47'. Further, the second airfoil 47' is offset relative to the first airfoil 46' in a direction perpendicular to the direction pointing from the leading edge 54 of the first airfoil 46' to the trailing edge 56 of the first airfoil 46'.

As shown in Fig. 5, the wind turbine blade 3 can comprise an actuator 60 to move, for example rotate, the blade elements such as the second blade element 47, as indicated by arrows 61. By moving the blade elements such as the second blade element 47, aerodynamic properties of the blade elements can be changed. For example, by moving the blade element by means of the actuator 60 a lift-to-drag ratio can be decreased in high wind conditions or can be increased in low wind conditions. The third airfoil of the third blade element 31 and the fourth airfoil of the fourth blade element 32 are similar to the first airfoil 46, 46' and the second airfoil 47, 47', respectively.

Fig. 7 shows a flowchart illustrating a method for manufacturing the wind turbine blade 3 according to an embodiment.

In step S1 of the method the first blade element 22 and the second blade element 23 are provided by manufacturing the first and second blade elements 22, 23 by extruding glass-fiber reinforce plastics.

In step S2 of the method, the first and second blade elements 22, 23 are arranged besides each other when seen in the lengthwise direction 21 by bolting the first and second blade elements 22, 23 each to the first plate 26 and the second plate 27. The first and second blade elements 22, 23 and the first and second plates 26, 27 form the first blade segment 15.

In step S3 of the method the third blade element 31 and the fourth blade element 32 are provided by manufacturing the third and fourth blade elements 31, 32 by extruding glass-fiber reinforce plastics.

In step S4 of the method, the third and fourth blade elements 31, 32 are arranged besides each other when seen in the lengthwise direction 21 by bolting the third and fourth blade elements 31, 32 each to the third plate 34 and the fourth plate 35. The third and fourth blade elements 31, 32 and the third and fourth plates 34, 35 form the second blade segment 16.

In step S5, the first blade segment 15 and the second blade segment 16 are connected to each other by bolting the second plate 27 to the third plate 34.

Steps S3 to S5 may be correspondingly repeated to form and connect the further blade segments 17, 18, 19.

In step S6, the first, second, and further blade segments 15, 16, 17, 18, 19 are connected to the root blade element 9 and to the hub 4 by means of a pretension cable 40.

In step S7, the pretension cable 40 is tensioned by means of the tensioning device 45.

Fig. 8 shows a flowchart illustrating a method for maintaining the wind turbine 1 according to an embodiment.

In a first step S8, the pretension cable 40 is released (Fig. 4) by unwinding an additional length 62 (Fig. 2) of the pretension cable 40 by means of the tensioning device 45.

In step S9, the first, second and further blade segments 15, 16, 17, 18, (19) are lowered down (Fig. 4). They are, for example, lowered down the tower 5 and to a vessel at sea level (not shown).

In step S10, the first, second and further blade segments 15, 16, 17, 18, (19) are maintained, for example repaired.

In step S11, the first, second and further blade segments 15, 16, 17, 18, (19) are hoisted up again to the root blade element 8 by pulling the pretension cable 40 by means of the tensioning device 45.

Although the present invention has been described in accordance with preferred embodiments, it is obvious for the person skilled in the art that modifications are possible in all embodiments.

## Claims

1. A wind turbine blade (3) having a lengthwise (21) and a chordwise direction (14), the wind turbine blade (3) comprising:
a first blade element (22) extending in the lengthwise direction (21) and having a first airfoil (46, 46') in the chordwise direction (14), and
a second blade element (23) extending in the lengthwise direction (21) and having a second airfoil (47, 47') in the chordwise direction (14),
wherein the first and second airfoils (46, 46', 47, 47') are arranged besides each other when seen in the lengthwise direction (21).

2. The wind turbine blade according to claim 1, wherein the first airfoil (46, 46') is spaced apart from the second airfoil (47, 47').

3. The wind turbine blade according to claim 1 or 2, wherein:
the first airfoil (46, 46') has a first chord length (L1) and the second airfoil (47, 47') has a second chord length (L2), and
the first chord length (L1) is different from the second chord length (L2).

4. The wind turbine blade according to any one of claims 1 to 3, wherein:
the first airfoil (46, 46') has a leading edge (54) and a trailing edge (56), and
the second blade element (23) is offset relative to the first blade element (22) in a direction pointing from the leading edge (54) of the first airfoil (46, 46') to the trailing edge (56) of the first airfoil (46, 46'), and/or
the second blade element (23) is offset relative to the first blade element (22) in a direction perpendicular to a direction pointing from the leading edge (54) of the first airfoil (46, 46') to the trailing edge (56) of the first airfoil (46, 46').

5. The wind turbine blade according to any one of claims 1 to 4, further comprising an actuator (60) configured for moving the first blade element (22) such that an aerodynamic property of the wind turbine blade (3) is changed, and/or for moving the second blade element (23) such that an aerodynamic property of the wind turbine blade (3) is changed.

6. The wind turbine blade according to any one of claims 1 to 5, further comprising:
a root blade element (9) configured for being connected to a hub (4) of a wind turbine (1),
a third blade element (31) extending in the lengthwise direction (21) and having a third airfoil (46, 46') in the chordwise direction (14), and
a fourth blade element (32) extending in the lengthwise direction (21) and having a fourth airfoil (47, 47') in the chordwise direction (14),
wherein:
the third and fourth airfoils (46, 46', 47, 47') are arranged besides each other when seen in the lengthwise direction (21),
the third and fourth blade elements (31, 32) are arranged with respect to the root blade element (9) away from the first and second blade elements (22, 23), and
the third and fourth blade elements (31, 32) are connected to the first and second blade elements (22, 23) by connecting means (27, 34).

7. The wind turbine blade according to any one of claims 1 to 6, further comprising:
a root blade element (9) configured for being connected to a hub (4) of a wind turbine (1), and
a pretension cable (40),
wherein:
the pretension cable (40) is connecting the first blade element (22), the second blade element (23), the third blade element (31), the fourth blade element (32) and/or the connecting means (26, 27, 34, 35) to the root blade element (9), and
the pretension cable (40) is configured for being connected inside the hub (4) of the wind turbine (1).

8. The wind turbine blade according to any one of claims 1 to 7, comprising a blade tip (20, 20') including an angled portion (25, 25'), the angled portion (25, 25') being angled relative to the lengthwise direction (21) of the wind turbine blade (3).

9. A wind turbine (1), comprising a wind turbine blade (3) according to any one of claims 1 to 8.

10. The wind turbine according to claim 9, comprising the wind turbine blade (3) according to any one of claims 7 to 8 and a tensioning device (45) for tensioning and/or releasing the pretension cable (40).

11. The wind turbine according to claim 10, wherein the pretension cable (40) comprises an additional length (62) sufficiently long for lowering the first and second blade elements (22, 23) and/or the third and fourth blade elements (31, 32) down a tower (5) of the wind turbine for maintaining the wind turbine blade (3).

12. A method for manufacturing a wind turbine blade (3) according to any one of claims 1 to 8, the wind turbine blade (3) having a lengthwise (21) and a chordwise direction (14), the method comprising the steps of:
providing (S1) a first blade element (22) having a first airfoil (46, 46') in the chordwise direction (14) and a second blade element (23) having a second airfoil (47, 47') in the chordwise direction (14), and
arranging (S2) the first and second airfoils (46, 46', 47, 47') besides each other when seen in the lengthwise direction (21).

13. The method according to claim 12, wherein:
the first and second airfoils (46, 46', 47, 47') are arranged (S2) besides each other by connecting both the first airfoil (46, 46') and the second airfoil (47, 47') to connecting means (26, 27), and
the first and second airfoils (46, 46', 47, 47') and the connecting means (26, 27) form a first blade segment (15).

14. The method according to claim 13, comprising the steps of:
providing (S3) a third blade element (31) having a third airfoil (46, 46') in the chordwise direction (14) and a fourth blade element (32) having a fourth airfoil (47, 47') in the chordwise direction (14),
arranging (S4) the third and fourth airfoils (46, 46', 47, 47') besides each other when seen in the lengthwise direction (21) by connecting both the third airfoil (46, 46') and the fourth airfoil (47, 47') to further connecting means (34, 35), the third and fourth airfoils (46, 46', 47, 47') and the further connecting means (34, 35) forming a second blade segment (16),
connecting (S5) the first blade segment (15) and the second blade segment (16) to each other.

15. A method for maintaining a wind turbine (1) comprising a wind turbine blade (3) according to any one of claims 1 to 8, comprising the steps of:
releasing (S8) a pretension cable (40), and
lowering (S9) the first and second blade elements (22, 23) and/or the third and fourth blade elements (31, 32) down a tower (5) of the wind turbine.
